# EUROPEAN PATENT APPLICATION

(11) **EP 4 796 363 A1**
(43) Date of publication of application: **26.08.2026**
(21) Application number: 25159925.4
(22) Date of filing: 25.02.2025
(51) Int. Cl.: B60K 35/10, B60W 50/10, G10L 13/00, G10L 15/22

(54) **SYSTEM AND METHOD FOR PROCESSING VEHICLE CONTEXT INFORMATION**

(71) Applicant: Aptiv Technologies AG, 8200 Schaffhausen (CH)
(72) Inventor: Barth, Alexander, 42929 Wermelskirchen (DE); Yu, Ting-Chieh (Allison), 42105 Wuppertal (DE); Jariwala, Darshil, 560066 Bengaluru (IN); Sunil, Bindu, 560100 Karnataka (IN); Marimuthu, Guruprasanna, 560037 Karnataka (IN); Chandra, Arnab, 560064 Bangalore (IN); Bansal, Gaurav, 560037 Karnataka (IN); Dhingra, Mansi, 50066 Bangalore (IN)
(74) Representative: Lewis Silkin LLP

(57) **Abstract**

A technique of processing a command of an occupant of a vehicle is presented in which the command, captured at the vehicle, is serviced by a remote content generation module receiving a multimodal prompt containing the command and information relating to the context of the command. The context is determined using information from vehicle sensors, and the content generation module may be a large language model, able to provide an intuitive response to the command, taking into account the information from the vehicle sensors. A variety of functions are caused to be performed in dependence on the response which is received.

## Description

### Field

The present disclosure relates to a system and method for processing vehicle context information. In particular, the present disclosure concerns forming a multimodal prompt for content generation based on a command of an occupant of a vehicle and contextual information, and causing a task to be performed based on a response from a content generation module processing the multimodal prompt.

### Background

Modern vehicles are increasingly equipped with advanced sensing and computing capabilities. These systems include interior sensors such as cabin cameras for driver monitoring and occupant detection, as well as exterior sensors such as cameras, radar, and lidar for perceiving the vehicle's surroundings. Additionally, vehicles often have access to map data, GPS location information, and connectivity to cloud-based services.

The proliferation of these sensing and data sources has created opportunities for more sophisticated and context-aware vehicle systems. For example, advanced driver assistance (ADAS) functions can be performed using information sensed by the vehicle, such as seat occupancy classification or traffic participants. However, effectively combining and utilizing the diverse information from multiple sensors and data sources is challenging. Traditional rule-based systems can struggle to handle the complexity and variability of real-world driving scenarios.

Another challenge is providing natural and intuitive interfaces for vehicle occupants to interact with increasingly capable vehicle systems. Voice assistants have improved, but are often limited in their ability to understand context or handle complex queries that reference the vehicle's environment.

Embodiments of the present disclosure are developed in this context and aim to use vehicle context in responding to commands or queries, or proactively providing suggestions to a driver or occupant of the vehicle.

### Summary

According to a first aspect, there is provided a system for processing a command of an occupant of a vehicle, comprising: a processing module arranged to receive the command from one of more first sensors, and to receive data from one or more second sensors corresponding to contextual information; a communication module configured to interact with a content generation module; and an output module; wherein the processing module is further configured to: generate a multimodal prompt for a model of the content generation module based on the received command and the contextual information, wherein one of the modes of the prompt is text; transmit the prompt to the content generation module via the communication module; and receive a response from the content generation module via the communication module; wherein the output module is arranged to cause a task to be performed, based on generated content of the received response.

In this way, a comprehensive solution for processing and acting upon vehicle context information is provided, which integrates multiple sensor inputs, generates context-aware queries, and leverages advanced content generation models to produce relevant responses and actions. The system's ability to dynamically respond to commands and contextual data enables more intelligent and adaptive vehicle interactions.

In embodiments, the output module comprises at least one of: a display screen, a head-up display, an augmented reality display, a speaker, and a transmitter for transmitting information to a device; and wherein the task comprises one or more of changing vehicle configuration settings, performing an automated driving assistance function, outputting audio and/or visual content, storing information and communicating with a remote computing system.

In this way, versatile output options for task execution are provided, enhancing the system's ability to provide relevant information and perform actions in various formats, improving the overall user experience and functionality of the vehicle.

In embodiments, one of the modes of the prompt comprises image data, video data, or audio data, wherein the processing module is arranged to remove or obscure personal information from the image data, video data and/or audio data and/or wherein the processing module is arranged to encrypt the prompt. By incorporating multiple data types and implementing privacy-preserving measures, the system's capability to process rich contextual information is enhanced, while maintaining user privacy and data security.

In embodiments, the processing module is arranged to crop image data from data received from the one or more second sensors based on the command, and to include the cropped image data in the prompt. In this way, more focused and relevant visual information is included in queries, improving the accuracy and efficiency of the content generation module's responses.

In embodiments, the processing module comprises an ingestion module for receiving information from the one or more second sensors and determining the contextual information from the one or more second sensors. In this way, the process of gathering and processing diverse sensor data is streamlined.

In embodiments, the processing module is arranged to access one or more additional information sources defining location data and/or points of interest, and to determine contextual information using the additional information in combination with the information from the one or more second sensors. By incorporating such additional data sources, the system's ability to provide more comprehensive and relevant contextual information is enhanced.

**In** embodiments, the system comprises a buffer arranged to store images captured by a camera system over a period of time, wherein the processing module is arranged to use one or more of stored images in combination with the additional information to determine contextual information. This buffering capability allows the system to consider recent historical visual data, improving contextual awareness and enabling more informed decision-making.

In embodiments, the processing module is arranged to determine the command from a microphone and/or a camera and to append a timestamp to the received command, wherein the processing module is further arranged to select contextual information from the one or more second sensors which is synchronized with the timestamps for the command. This ensures that the contextual information aligns as closely as possible with the point in time of the command, so that the context of the command can be determined as accurately as possible.

In embodiments, the output module comprises a text-to-speech module for converting text from the content generation module to a speech output. In this way, the system is able to provide auditory feedback, improving accessibility and allowing for hands-free interaction with the generated content.

In embodiments, the communication module is arranged to transmit the prompt to a remote computing system hosting the content generation module. In this way, complex processing tasks can be offloaded to more powerful remote systems, potentially improving the speed and capabilities of the content generation process.

In embodiments, the system comprises the content generation module, wherein the content generation module is a first large language model.

In embodiments, the communication module is arranged to transmit the prompt to a remote computing system hosting a second large language model if the processing module determines that the complexity of the prompt exceeds a threshold level of complexity, wherein the processing module is arranged to determine the complexity of the prompt in dependence on the processing resources required to determine a response to the prompt. This adaptive approach to query processing allows the system to balance between local and remote processing based on prompt complexity, optimizing performance and resource utilization.

In embodiments, the system further comprises a remote computing system hosting the content generation module, wherein the content generation module is a large language model, wherein the large language model is arranged to request the communication module to transmit contextual information to the content generation periodically, wherein the processing module is be arranged to append a timestamp to the transmitted contextual information. In this way, it can be ensured that the content generation module has access to the most recent contextual information, improving the relevance and accuracy of generated responses over time.

In embodiments, the system comprises the one or more first sensors, and the one or more second sensors, wherein the one or more first sensors comprise a camera and/or a microphone arranged to receive a command from an occupant of the vehicle, or sense vehicle status information; wherein the one or more second sensors are arranged to sense the interior and/or exterior of the vehicle to determine information relating to the context of the vehicle and/or the occupant of the vehicle.

This comprehensive system configuration enables a wide range of contextual data to be gathered from both inside and outside the vehicle, in which the sensors are optimized for use with the processing module so as to facilitate the determination of commands and contextual information.

According to a second aspect, there is provided a computer-implemented method of processing a command of an occupant of a vehicle is provided. The method comprises: receiving a command from one of more first sensors, and receiving data from one or more second sensors corresponding to contextual information; generating a multimodal prompt for a model of a content generation module based on the command and the contextual information; transmitting the prompt to the content generation module; and receiving a response from the content generation module; causing a task to be performed, based on generated content of the received response.

According to a third aspect, there is provided a system for processing vehicle context information is provided. The system comprises: a processing module arranged to determine a trigger condition from one or more first sensors, and to receive data from one or more second sensors corresponding to contextual information; a communication module configured to interact with a content generation module; and an output module; wherein the processing module is further configured to: generate a multimodal query based on the trigger condition and the contextual information; transmit the multimodal query to the content generation module via the communication module; and receive a response from the content generation module via the communication module; wherein the output module is arranged to cause a task to be performed, based on generated content of the received response.

### Brief Description of Drawings

Illustrative embodiments will now be described with reference to the drawings in which:
Figure 1 illustrates a system for processing a command of an occupant of a vehicle according to embodiments of the present disclosure; and
Figure 2 illustrates the operation of the processing module according to embodiments of the present disclosure.

### Detailed Description

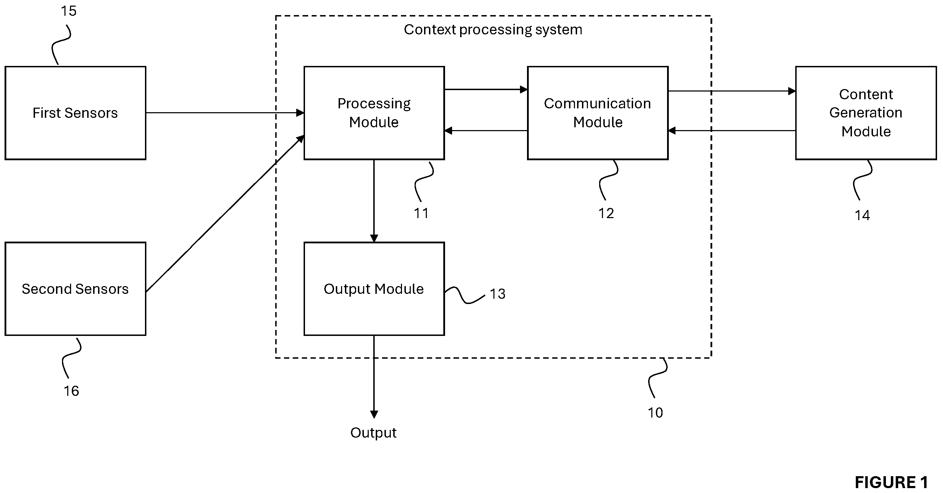

Figure 1 illustrates a system 10 for processing a command of an occupant of a vehicle according to embodiments of the present disclosure. The system 10 comprises a processing module 11, a communication module 12, and an output module 13, which work together to process sensor data, generate multimodal prompts, interact with a content generation module 14, and instruct tasks to be performed based on the generated content.

The system architecture of Figure 1 enables the processing of complex, context-aware queries, leveraging multiple data sources and advanced content generation capabilities to provide relevant responses and instruct appropriate actions. Figure 1 demonstrates the interconnected nature of these components and their roles in the overall process of capturing, analysing, and acting upon vehicle context information, as described below. The system 10 is described in the context of an automotive system, in which the system 10 processes vehicle context information and is hosted using the vehicle's on-board processing and controller functions, interacts with the vehicle's sensors, such as cabin monitoring systems (CMS) including driver monitoring systems (DMS) and occupant monitoring systems (OMS), and interacts with a content generation module 14 hosted remotely from the vehicle.

**One** or more first sensors 15 collect data from which the processing module 11 is able to determine a command of an occupant of the vehicle. In embodiments, the trigger condition is a spoken command or question, and the term 'command' is used in the present disclosure to interchangeable with the terms 'instructions', 'requests' and 'questions'. The command triggers the system 10 to take further action in dependence upon the content of the command, and the context in which the command was received. The processing module 11 analyses the information from the one or more first sensors 15 to determine the presence of the command, such as a keyword in a voice command, based on a speech processing algorithm executed by the processing module 11.

**As** an example, the one or more first sensors 15 comprise a microphone, capturing the question "what is this?" spoken by the driver of the vehicle. One or more second sensors 16 collect data corresponding to contextual information associated with the question. For example, the contextual information is an image captured by a camera system at the front of the vehicle, the image containing the object of the driver's question. The object may be a landmark, for example.

The processing module 11 generates a multimodal prompt, on the basis of which an answer to the driver's question is to be determined by a model of the content generation module 14. The multimodal prompt contains both the text of the question, and the image which is the object of the question. As such, the multimodal prompt directs the content generation module 14 to find the name, or may generate additional information for a landmark having an appearance matching that contained in the image. The multimodal prompt is formatted for transmission by the communication module 12 to the content generation module 14, hosted remotely from the vehicle. The content generation module 14 processes the multimodal prompt in order to determine a response to the command, based on a model executing, for example, a machine-learning algorithm accessing a network storing information, such as the internet.

The response is received by the communication module 12, and the processing module 11 determines an action to be taken based on the response. The output module 13 outputs an instruction to a function on the vehicle which can provide a response to the command. In the present example, the output module 13 instructs a speaker to output a spoken response to the driver's question, informing the driver of the identity of the landmark captured by the camera system.

More generally, the one or more first sensors 15 provide information which inform the processing module 11 that a response is required from the content generation module 14. The response may be information that is requested by an occupant of the vehicle. Alternatively, the processing module 11 is able to proactively determine, by polling data from the one or more first and second sensors 15, 16, that a particular output is required, based on, for example, a detected driving irregularity such as entering an excluded zone or drifting outside of a lane.

In embodiments, the one or more first sensors 15 comprise a microphone for capturing audio input or ambient sound within the vehicle.

In embodiments, the one or more first sensors 15 comprise a camera system for capturing images within the vehicle, using image processing algorithms to detect and interpret gestures of occupants, facial expressions, or other body language that could serve as a trigger to determine a response to a command. In some embodiments, such image processing algorithms are executed by the processing module 11.

In embodiments, the one or more first sensors 15 comprise vehicle status sensors such as speed or acceleration sensors, vehicle location sensors, and other sensors for determining a parameters of the vehicle which may inform the presence of a trigger condition for requesting a response to a command.

The processing module 11 applies algorithms to the data collected by the one or more first sensors 15 to identify potential commands. This may involve natural language processing for voice commands, image recognition for visual triggers, or pattern recognition in examples in which vehicle status data is used. In some embodiments, machine learning models are employed to improve the system's ability to recognize and respond to diverse trigger conditions over time.

The one or more first sensors 15 may operate continuously or be activated based on certain conditions. For instance, voice recognition systems may utilize wake words to initiate active listening, while cameras or vehicle status sensors may monitor constantly but only flag data for processing when certain thresholds are met.

**The** one or more second sensors operate 16 to collect contextual information related to the vehicle and its environment. In embodiments, the one or more second sensors 16 include exterior-facing cameras that capture visual data of the surroundings, such as road conditions, traffic, pedestrians, or landmarks. Such cameras may employ image processing techniques to identify and classify objects in the environment.

The one or more second sensors 16 may also include interior-facing cameras as part of a CMS, and the cameras described above in relation to the one or more first sensors 15, which may capture occupant gestures or facial expressions, may capture information for providing context to a command, rather than for the purpose of detecting a trigger condition. As such, a camera may be considered as part of both the one or more first sensors 15, or the one or more second sensors 16, in dependence on the way in which the processing module 11 uses the captured information.

Interior-monitoring sensors, including cameras, may employ occupant detection systems, using weight sensors or cameras to determine the number and position of passengers. Climate sensors may monitor temperature and humidity levels inside the vehicle. Camera systems may capture gaze direction or head direction in order to determine what an occupant is looking at when a command or question is captured.

In embodiments, the one or more second sensors 16 include lidar and/or radar systems. This technology provides precise distance measurements and object detection capabilities, even in poor visibility conditions, enhancing the system's understanding of the vehicle's context.

In embodiments, the one or more second sensors 16 include GPS receivers that provide accurate location data. This geographical context may be combined with other sensor data to provide location-specific information or services.

In embodiments, the one or more second sensors 16 include microphones placed strategically around the vehicle to capture ambient sounds or conversations. This audio data may provide additional context for interpreting occupant requests or understanding the vehicle's environment. The microphones may be the same as those used as the one or more first sensors 15, the processing module resolving commands from ambient noise.

In embodiments, the second sensors 16 also include specialized sensors for specific applications. For example, air quality sensors may monitor pollution levels, which could be relevant for route planning or climate control decisions. Vehicle status information, such as fuel level, oil level, water temperature, tyre pressure, and mileage can be used, in conjunction with predetermined vehicle information such as vehicle ID, model, license plate, and driver or occupant ID to further enrich context information.

In embodiments, the processing module 11 fuses data from multiple second sensors 16 to create a comprehensive understanding of the vehicle's context. For instance, visual data from cameras may be combined with distance measurements from lidar and speed data from radar to create a detailed representation of the vehicle's surroundings.

The data from the second sensors 16 may be continuously collected and processed, allowing the system 10 to maintain an up-to-date understanding of the vehicle's context. This real-time contextual awareness enables the system 10 to provide more relevant and timely responses to occupant queries or proactively offer information or services based on the current situation.

The output module 13 serves as the interface between the system's processing components 11 and the vehicle's various output or actuation mechanisms. In embodiments, the output module 13 is capable of controlling multiple types of output devices to provide information or execute actions based on the content generated by the content generation module 14.

In embodiments, the output module 13 includes capabilities for audio output, such as controlling the vehicle's speaker system. This may allow for the playback of synthesized speech responses, audio alerts, or other auditory information.

In embodiments, visual output is also be managed by the output module 13. This involves controlling various display devices within the vehicle, such as dashboard screens, head-up displays, augmented reality displays or infotainment system interfaces. Alternatively, output on an occupant's mobile device or wearable technology such as smart watch may also be controlled. The output module 13 is capable of rendering text, images, or video content as appropriate for the generated response.

In embodiments, the output module 13 interfaces with the vehicle's control systems to execute physical actions. This could include adjusting climate control settings, modifying vehicle performance parameters, or activating driver assistance features based on the system's generated responses.

In embodiments, the output module 13 handles data transmission tasks, such as sending information to connected mobile devices or cloud-based services, such as recording notes or reminders such as logs of points of interest observed on a journey, placing a call or sending a message, creating a social media post, retrieving information, storing information, performing online tasks, scheduling alerts to contact a person or business at a particular time in the future, and so on. This capability thus enables the system 10 to provide responses or execute actions that extend beyond the immediate vehicle environment.

The processing module 11 is responsible for analyzing and interpreting data from various sensors 15, 16, generating multimodal prompts, and coordinating system responses. The processing module 11 may comprise one or more microprocessors, field-programmable gate arrays (FPGAs), or application-specific integrated circuits (ASICs) designed to handle complex computational tasks.

The processing module 11 employs various algorithms and techniques to process incoming data. For instance, it may utilize natural language processing (NLP) algorithms to interpret voice commands captured by microphones, from which a trigger event can be identified. In some embodiments, the processing module 11 incorporates machine learning models, such as neural networks, to improve its ability to recognize patterns and make decisions based on sensor inputs over time.

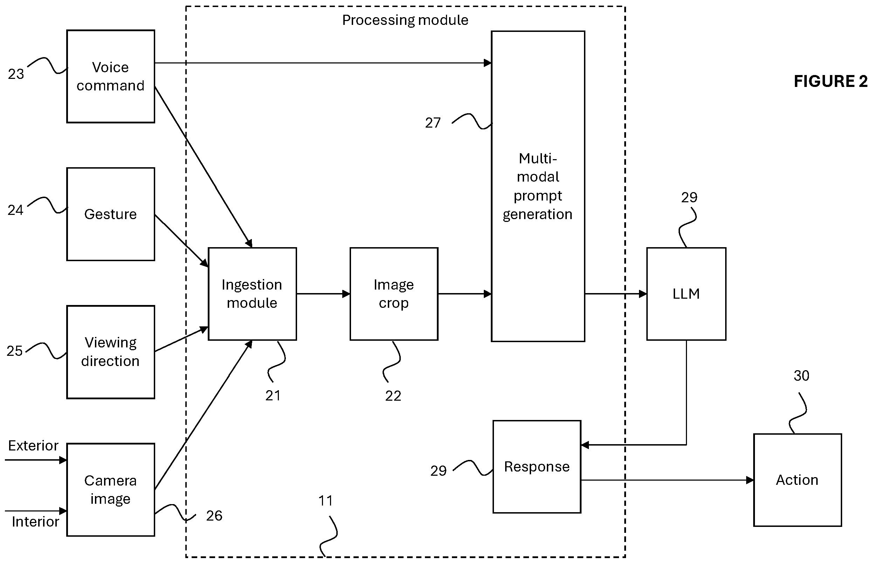

Figure 2 illustrates the operation of the processing module 11 according to embodiments of the present disclosure. In the illustrated embodiment, the processing module 11 comprises an ingestion module 21, an image crop module 22, and a multimodal prompt generation module 27.

The ingestion module 21 operates to receive sensor input from a plurality of sources and determine information relating to the context of a voice command 23. The ingestion module 21 is able to parse diverse information and convert it into a common format on which contextual determinations are made. In the illustrated embodiment, the voice command 23 itself may be received by the ingestion module 21 as aspects such as the tone of voice or urgency may be useful in providing context to the words which are spoken.

The ingestion module 21 also receives information relating to a gesture 24 of the occupant of the vehicle, such as a hand motion, and a viewing direction 25 of the occupant. Additionally, one or more camera images 26 relating to the interior and/or exterior of the vehicle cabin are provided. The gesture 24 and viewing direction 25 may be derived from the camera images 26 but may instead be detected by dedicated sensors such as motion detectors or cameras configured specifically to identify gestures and determine viewing direction, using pattern processing or gaze identification algorithms.

The ingestion module 21 acts to determine the context of the voice command 23. Contextual information enables the processing module 11 to determine what object or scene a user is looking at, and whether text or images in the scene provide information to be used as a reference in the command. For example, in the commands "call this number", "bookmark the QR code on the side of that vehicle", "save the contact details for that store on the left", and "when does that store close", the number, QR code, and store identities are necessary for the command to be processed, while these are not defined in the voice command itself.

Particularly in the case in which an image of the exterior of the vehicle is submitted to the processing module 11, an image crop 22 is performed in order to select the relevant part of the image to be included in the multimodal prompt generated by the multimodal prompt generation module 27. This enables redundant information in the multimodal prompt to be removed, simplifying subsequent query-processing steps, and focusing on the objects of interest. For example, if a command is to follow a QR code printed on a signpost next to the road, the image crop 22 acts to remove images associated with other vehicles, buildings, the road, and other background information from the image, so that only an image of the QR code is included in the image crop 22.

In some embodiments, the image crop 22 also acts to anonymise information in capture images, such as personal information associated with faces of pedestrians, and license plates of other vehicles, so that confidential information is not included in the prompt. This is done by removing or obstructing, such as by blurring, the confidential information. By using the ingestion module 21 to determine contextual information in a vehicle, further enhances the security of the system 10.

**The** image crop 22 is performed using a variety of techniques. In embodiments, the image crop 22 performs object recognition using edge detection and pattern processing to identify bounding boxes that can be constructed around a region of interest containing a particular object. The object may be associated with a particular colour, shape, temperature, size, and may correlate with predefined information defining the object, such as the shape of a road sign, the size or colour of a traffic cone, and so on. Object recognition may form part of an ADAS object identification algorithm, and object selection may be applied to the recognized objects using, for example, the gaze of a driver determined from a DMS, in order to identify the objects to be contained in the cropped image.

The multimodal prompt generation module 27 acts to compose a query in a format suitable for submission to a content-generation module for generating a response to the command. In the embodiment illustrated in Figure 2, the multimodal query is a prompt to a large language model LLM 28, instructing the LLM 28 as to what information to process and the format in which the response should be provided.

**In** the present disclosure, the term 'multimodal' refers to the fact that prompt comprises a user command in combination with other elements and instructions. In general terms, the multimodal prompt comprises text in combination with image data, video data, audio data. As such, the prompt has two or more constituents, which relate to different information types. The text is derived from the user command.

By way of example, the prompt can comprise eye gaze data, including origin vectors and eye direction vectors, text of the user's question, images obtained at the time the user asked the question, and gesture information such as a pointing direction. From this, the prompt instructs the LLM 28 to determine whether the user is looking straight, left or right, focus on a region of interest of the image in the determined direction in the image, and answer the user's question as it applies to information in the region of interest of the image. The permitted information sources to be used in determining a response to the command can also be specified by the multimodal prompt generation module 27, as the internet or a history of previous queries history, and the format of the response may be specified, for example by reference to particular phraseology that should or should not be included.

In embodiments, the multimodal prompt generation module 27 encrypts the multimodal prompt. This is particularly beneficial as the prompt is transmitted outside of the vehicle, for example into a cloud-hosted computing system.

A response 29 to the multimodal prompt is generated by the LLM 28 and is provided to the processing module 11, which instructs a particular action 30 to be output, as described above in relation to Figure 1. The response 29 may be parsed by the processing module 11 and processed into a form in which it can be interpreted, if it is not already provided in such a format by the LLM 28. For example, a response may specify more than one action, such as requiring the output of visual information on display, and activating a cabin light - in this example, the parsed response 29 can be resolved into these two distinct actions.

The operation described with reference to Figure 2 can help drivers and passengers to have a personal assistant or buddy during drives, with a number of advantageous effects. For example, the system 10 can provide live updates while passing points of interest, suggest routing changes, and provide information on warning lights or signs, whether internal or external. The system 10 can integrate with mobile and smart home devices, allowing drivers and passengers to manage their environments and routines from within their vehicle.

In the embodiments illustrated with reference to Figures 1 and 2, the LLM 28 is outside of the vehicle and is generalized as a content generation module 14 which is not restricted to providing responses in text form, but could provide other content such as images, video, audio which are instructed to be output via the output module 13. In an example, a stock image of a landmark may be retrieved based on a command to retrieve such a stock image of by object identified by an occupant pointing out of the window of a vehicle, and the stock image which is returned may be provided directly to the occupant's device, or the device of another occupant, which can be pasted directly in to a document or a social media post without the occupant having to leave the application with which the document or social media post is created.

In embodiments in which an LLM 28 is employed and text responses are provided to the processing module 11, the system 10 further may further comprise a text-to-speech module in order to generate a spoken output, or derive a visual representation of the spoken output from the text response. A speech-to-text module, providing a conversion in the reverse direction, is also employed by the multimodal prompt generation module 27 to convert a spoken command into a text format for the multimodal prompt in the form of a transcript of a command or question.

**LLMs** provide a popular way to enable complex interactions, and by arranging them outside of the vehicle onto a remote computing system such as a cloud-based system, complex processing routines do not need to be performed on the vehicle, but the occupants of the vehicle are nonetheless able to access the rich functionality provided by the LLM. By integrating raw sensor data with remote LLM functionality, or remote content generation functionality, it is possible to derive significant benefits by enabling detailed and accurate responses to commands to be provided, however transient in nature, based on using a content generation module to process context surrounding the command. Further, the provided responses are in an intuitive form, as a result of the action of the content generation module, facilitating executing of further steps and enabling the occupant of a vehicle to experience content, changes in vehicle settings and technical configurations, receive information, schedule future actions, all without distraction from their activities, such as driving or conversing with other vehicle occupants, or using devices for other parallel tasks.

**In** embodiments, a complexity determination module is arranged to resolve a prompt into different levels of complexity associated with different processing resources required to answer a user command. For example, a low complexity prompt may require an immediate, yet simple response that can be determined from 'static' information, for example image-matching, such as "what car is this?". A more advanced instruction may trigger one or more actions with storage, such as bookmarking a QR code or URL. Yet more advanced may be a prompt requiring live, dynamic data in its response, such as "what is the special in this restaurant today?".

The complexity determination module is particularly useful in the context of a hybrid configuration in which a first LLM is arranged in the vehicle-based system 10, and a second LLM is arranged remotely. Here, the first LLM can handle simple to medium queries, but the complexity determination module may decide to route a prompt to the second LLM for more complex queries. In this manner, the efficiency of data communication between a vehicle and a remote system can be balanced against the nature of the prompt. Therefore, for simple commands, particularly those requiring immediate response, it may be advantageous to avoid the need for communication with a remote LLM, and the system 10 can handle simple commands in remote or obscured environments such rural areas or tunnels where communication with a remote LLM may be more difficult. The hybrid system thus enables latency to be reduced.

The complexity determination module determines the level of complexity of a prompt by estimating the required computing time, or resources, associated with determining a response to a particular task. The complexity determination module may make such an assessment at a high level, classifying the prompt by type in a similar manner to the examples described above. The complexity determination module may also consider the number of discrete elements in the multi-modal prompt, and the information types that are required to be processed, for example video clips could be more complex to process than cropped images. The complexity determination module may take into account the availability of local processing power to support the local LLM, which may vary from manufacturer to manufacturer.

The complexity determination module is implemented as an edge computing system, acting as an interface between functional modules of a vehicle, and those of a remote computing system hosting a content generation module.

It will be appreciated that there are a number of modifications to the embodiments described above, dependent on particular vehicle configurations and requirements, which will fall within the scope of the appended claims.

For example, the embodiments described above make reference to use of images 26 as an information source for the processing module 11. The processing module 11 may also receive videos captured over a period of time. In this regard, captured videos, and associated audio, may be stored continuously or periodically in a buffer in the system 10, which is overwritten when full, for example on a cyclic basis. Alternatively, the system may be provided with a user interface function by which recent periods or audio or video capture are 'locked' by transferring captured content to a memory which will not be overwritten, so that the associated video and audio can be used to assist with future queries (for example, "is this the landmark we were talking about an hour ago?").

Context information captured at the time of such continuous audio/video capture may be tagged with a timestamp in order to synchronise it with a corresponding timestamp of the audio/video capture. In this way, relevant contextual information can be derived from a journey history, such as a route that is taken, or conversational history of occupants of a vehicle, so that appropriate queries can be generated.

In embodiments, the processing module 11 access additional information sources beyond data provided by the one or more first and second sensors 15, 16 in order for the ingestion module 21 to determine contextual information. Examples of such additional information sources are location or map information defining the positions and other information relating to points of interest. In such embodiments, a sensor of the one or more second sensors 16 may determine the co-ordinates of a vehicle, such as a Global Positioning System (GPS), which is overlaid on the additional map information, so that information can be determined as to what is in the immediate vicinity of the vehicle. As such, the additional information relates to information which is not itself directly sensed, but which can be used to interpret the information which is sensed.

Further examples of additional information sources are object lists or predetermined points of interest such as buildings, parks, tourist attractions, service stations, restaurants and public facilities.

In modifications of the described embodiments, the multimodal prompt generation module 27 may be arranged outside the vehicle. The ingestion module 21 may also be arranged outside the vehicle, for example in a cloud-based system. The image crop 22 module may be omitted from the processing module 11 in some embodiments.

In embodiments in which the ingestion module 21 is outside of the vehicle, the ingestion module 21 operates to constantly collect command or question data and sensor data, labelled with a timestamp, using pull logic. The sensor data and command or question data is integrated remotely from the vehicle, and contextual information is determined in order to generate the prompt. The response is provided to the vehicle as described in Figure 2.

In each of the embodiments described herein, modules which are referenced may be implemented in hardware, in software, or in a combination of both. Software-based modules may be standalone modules, or may represent functional sections of executable code, executed by one or more processing units such as the electronic control units of an automotive control system, for the features which are hosted on-board the vehicle.

## Claims

1. A system for processing a command of an occupant of a vehicle, comprising:
a processing module arranged to receive the command from one of more first sensors, and to receive data from one or more second sensors corresponding to contextual information;
a communication module configured to interact with a content generation module; and
an output module;
wherein the processing module is further configured to:
generate a multimodal prompt for a model of the content generation module based on the received command and the contextual information, wherein one of the modes of the prompt is text;
transmit the prompt to the content generation module via the communication module; and
receive a response from the content generation module via the communication module;
wherein the output module is arranged to cause a task to be performed, based on generated content of the received response.

2. A system according to claim 1, wherein:
the output module comprises at least one of: a display screen, a head-up display, an augmented reality display, a speaker, and a transmitter for transmitting information to a device; and
wherein the task comprises one or more of changing vehicle configuration settings, performing an automated driving assistance function, outputting audio and/or visual content, storing information and communicating with a remote computing system.

3. A system according to claim 1 or claim 2, wherein the one of the modes of the prompt comprises image data, video data, or audio data,
wherein the processing module is arranged to remove or obscure personal information from the image data, video data, and/or audio data; and/or
wherein the processing module is arranged to encrypt the prompt.

4. A system according to claim 3, wherein the processing module is arranged to crop image data from data received from the one or more second sensors based on the command, and to include the cropped image data in the prompt.

5. A system according to any one of the preceding claims, wherein the processing module comprises an ingestion module for receiving information from the one or more second sensors and determining the contextual information from the one or more second sensors.

6. A system according to claim 5, wherein the processing module is arranged to access one or more additional information sources defining location data and/or points of interest, and to determine contextual information using the additional information in combination with the information from the one or more second sensors.

7. A system according to claim 6, comprising a buffer arranged to store images captured by a camera system over a period of time, wherein the processing module is arranged to use the one or more of stored images in combination with the additional information to determine contextual information.

8. A system according to any one of the preceding claims wherein the processing module is arranged to determine the command from a microphone and/or a camera and to append a timestamp to the received command, wherein the processing module is further arranged to select contextual information from the one or more second sensors which is synchronized with the timestamps for the command.

9. A system according to any one of the preceding claims, wherein the output module comprises a text-to-speech module for converting text from the content generation module to a speech output.

10. A system according to any one of the preceding claims, wherein the communication module is arranged to transmit the prompt to a remote computing system hosting the content generation module.

11. A system according to any one of claims 1 to 9, comprising the content generation module, wherein the content generation module is a first large language model.

12. A system according to claim 11, wherein the communication module is arranged to transmit the prompt to a remote computing system hosting a second large language model if the processing module determines that the complexity of the prompt exceeds a threshold level of complexity, wherein the processing module is arranged to determine the complexity of the prompt in dependence on the processing resources required to determine a response to the prompt.

13. A system according to any one of claims 1 to 9, further comprising a remote computing system hosting the content generation module, wherein the content generation module is a large language model,
wherein the large language model is arranged to request the communication module to transmit contextual information to the content generation periodically, wherein the processing module is arranged to append a timestamp to the transmitted contextual information.

14. A system according to claim 13, further comprising the one or more first sensors, and the one or more second sensors,
wherein the one or more first sensors comprise a camera and/or a microphone arranged to receive a command from an occupant of the vehicle, or sense vehicle status information;
wherein the one or more second sensors are arranged to sense the interior and/or exterior of the vehicle to determine information relating to the context of the vehicle and/or the occupant of the vehicle.

15. A computer-implemented method of processing a command of an occupant of a vehicle, comprising:
receiving a command from one of more first sensors, and receiving data from one or more second sensors corresponding to contextual information;
generating a multimodal prompt for a model of a content generation module, based on the command and the contextual information;
transmitting the prompt to the content generation module; and
receiving a response from the content generation module;
causing a task to be performed, based on generated content of the received response.

## Amended claims

### Amended claims in accordance with Rule 137(2) EPC.

1. A system for processing a command of an occupant of a vehicle, comprising:
a processing module (11) arranged to:
receive the command from one of more first sensors (15),
determine context of the command using data from one or more second sensors (16);
a communication module (12) configured to interact with a content generation module (14); and
an output module (13);
wherein the processing module is further configured to:
generate a multimodal prompt for a model of the content generation module based on the received command and the determined context, wherein one of the modes of the prompt is text, based on the command, and at least one of the modes of the prompt comprises image data, video data or audio data, based on the data from the one or more second sensors corresponding to the context of the command;
transmit the prompt to the content generation module via the communication module; and
receive a response from the content generation module via the communication module;
wherein the output module is arranged to cause a task to be performed, based on generated content of the received response.

2. A system according to claim 1, wherein:
the output module (13) comprises at least one of: a display screen, a head-up display, an augmented reality display, a speaker, and a transmitter for transmitting information to a device; and
wherein the task comprises one or more of changing vehicle configuration settings, performing an automated driving assistance function, outputting audio and/or visual content, storing information and communicating with a remote computing system.

3. A system according to claim 1 or claim 2,
wherein the processing module (11) is arranged to remove or obscure personal information from the image data, video data, and/or audio data; and/or
wherein the processing module is arranged to encrypt the prompt.

4. A system according to claim 3, wherein the processing module (11) is arranged to crop image data from data received from the one or more second sensors (16) based on the command, and to include the cropped image data in the prompt.

5. A system according to any one of the preceding claims, wherein the processing module (11) comprises an ingestion module (21) for receiving information from the one or more second sensors (16) and determining contextual information from the one or more second sensors.

6. A system according to claim 5, wherein the processing module (11) is arranged to access one or more additional information sources defining location data and/or points of interest, and to determine contextual information using the additional information in combination with the information from the one or more second sensors (16).

7. A system according to claim 6, comprising a buffer arranged to store images captured by a camera system over a period of time, wherein the processing module (11) is arranged to use the one or more of stored images in combination with the additional information to determine contextual information.

8. A system according to any one of the preceding claims wherein the processing module (11) is arranged to determine the command from a microphone and/or a camera and to append a timestamp to the received command, wherein the processing module (11) is further arranged to select contextual information from the one or more second sensors (16) which is synchronized with the timestamps for the command.

9. A system according to any one of the preceding claims, wherein the output module (13) comprises a text-to-speech module for converting text from the content generation module (14) to a speech output.

10. A system according to any one of the preceding claims, wherein the communication module (12) is arranged to transmit the prompt to a remote computing system hosting the content generation module (12).

11. A system according to any one of claims 1 to 9, comprising the content generation module (14), wherein the content generation module is a first large language model (29).

12. A system according to claim 11, wherein the communication module (12) is arranged to transmit the prompt to a remote computing system hosting a second large language model if the processing module (11) determines that the complexity of the prompt exceeds a threshold level of complexity, wherein the processing module is arranged to determine the complexity of the prompt in dependence on the processing resources required to determine a response to the prompt.

13. A system according to any one of claims 1 to 9, further comprising a remote computing system hosting the content generation module (14), wherein the content generation module is a large language model (29),
wherein the large language model is arranged to request the communication module (12) to transmit contextual information to the content generation module periodically, wherein the processing module (11) is arranged to append a timestamp to the transmitted contextual information.

14. A system according to claim 13, further comprising the one or more first sensors (15), and the one or more second sensors (16),
wherein the one or more first sensors comprise a camera and/or a microphone arranged to receive a command from an occupant of the vehicle, or sense vehicle status information;
wherein the one or more second sensors are arranged to sense the interior and/or exterior of the vehicle to determine information relating to the context of the vehicle and/or the occupant of the vehicle.

15. A computer-implemented method of processing a command of an occupant of a vehicle, comprising:
receiving a command from one of more first sensors (15),
determining context of the command, using data from one or more second sensors (16) corresponding to the determined context;
generating a multimodal prompt for a model of a content generation module (14), based on the command and the determined context, wherein one of the modes of the prompt is text, based on the command, and at least one of the modes of the prompt comprises image data, video data or audio data, based on the identified data from the one or more second sensors corresponding to the context of the command;
transmitting the prompt to the content generation module; and
receiving a response from the content generation module;
causing a task to be performed, based on generated content of the received response.
